# EUROPÄISCHE PATENTANMELDUNG

(11) **EP 1 014 536 A2**
(43) Veröffentlichungstag der Anmeldung: **28.06.2000**
(21) Anmeldenummer: 99124609.1
(22) Anmeldetag: 10.12.1999
(51) Int. Cl.: H02K 1/14, H02K 15/02

(54) **Statorpaket mit einsetzbarem Polschenkel**

(30) Priorität: 22.12.1998 DE 19859065
(71) Anmelder: WILO GmbH, D-44263 Dortmund (DE)
(72) Erfinder: Kech, Hansjürgen, 58313 Herdecke (DE); Lütkenhaus, Norbert, 59399 Olfen (DE)
(74) Vertreter: COHAUSZ HANNIG DAWIDOWICZ & PARTNER

(57) **Zusammenfassung**

Elektromotor, insbesondere zum Betrieb eines Lüfters oder einer Pumpe, mit einem Statorpaket, das von Wicklungen umwickelte Polschenkel aufweist, wobei die Polschenkel von einem Polring umgeben sind, an dem die Polschenkel lösbar befestigt sind, wobei die Polschenkel 3 jeweils über eine axial angeordnete Linearführung 5 insbesondere eine Schwalbenschwanzführung mit dem Polring 2 verbunden sind.

## Beschreibung

Die Erfindung betrifft einen Elektromotor, insbesondere zum Betrieb einer Pumpe, mit einem Stator, der von Wicklungen umwickelte Polschenkel aufweist, und mit einem Polring, der die Polschenkel umgibt und an dem die Polschenkel lösbar befestigt sind. Die Erfindung betrifft gleichfalls ein Verfahren zur Herstellung des Statorpaketes eines derartigen Elektromotors.

Generell sind Elektromotoren bekannt, die einen Polring mit angeformten Polschenkeln aufweisen, wobei der Poring in eine der Anzahl der Polschenkel entsprechende Zahl von Segmenten aufgeteilt sein kann. Da Polring und Polschenkel eine Einheit bilden, müssen derartige aus Polring und Polschenkeln bestehende Statorpakete mit sogenannten Nadelwicklern bewickelt werden. Dabei werden Nadeln von einer Stirnseite des Statorpaketes zwischen die Polschenkel geführt und dabei der Draht um einen Polschenkel gelegt. Diese Art des Wickelns hat den Nachteil, daß die Windungen des Drahtes innerhalb der Wicklung eine große Zahl von Kreuzungspunkten aufweisen, was zu einer entsprechend geminderten Packungsdichte und damit zur Vergrößerung der Wicklungslänge (mittlere Spulenlänge) führt. Gleichzeitig erhöht die entsprechend größere Länge des Wickeldrahtes die Herstellungskosten des Motors, was gerade bei kleinen Motoren besonders ins Gewicht fällt.

Bei größeren Motoren ist es bekannt, die Polschenkel einzeln mit Spulenwicklern zu wickeln und sie im gewickelten Zustand im Inneren des Polringes zu verschrauben. Diese Methode ist aufwendig und teuer, da manuelle Fertigungsschritte notwendig sind. Polschenkel im Polring zu verschrauben ist bei der Fertigung von kleinen Motoren zwischen 100 und 1000 Watt, die in Serie massenweise hergestellt werden, nicht praktikabel.

Aufgabe der vorliegenden Erfindung ist es daher, einen Elektromotor zu schaffen, dessen Statorpaket sich bei geringer Baugröße und großem Wirkungsgrad einfach und kostengünstig fertigen läßt. Gleichzeitig ist es Aufgabe der Erfindung ein Verfahren zur Herstellung eines Statorpaketes des erfindungsgemäßen Motors zu schaffen.

Diese Aufgabe wird durch einenen Elektromotor nach Anspruch 1 und ein Verfahren nach Anspruch 11 gelöst.

Der Kern der Erfindung ist, daß die Polschenkel mit dem Polring über eine axial angeordnete Linearführung verbunden sind. Durch eine solche Führung, die einen formschlüssigen Halt der Polschenkel in Umfangsrichtung und in axialer Richtung und einen kraftschlüssigen Halt in axialer Richtung bietet, ergibt sich der wesentliche Vorteil, daß der Polschenkel schon vor dem Einbau in den Polring bewickelt und nach dem Bewickeln maschinell in den Polring eingebracht werden kann. Die separaten Polschenkel können dabei mit Spulenwicklern wie Trafowicklungen lagenweise bewickelt werden, die wegen der Vermeidung von Überkreuzungen des Drahtes innerhalb der Wicklung in wesentlich größerer Packungsdichte wickeln als die bekannten Nadelwickler. Dabei können Drähte mit größerem Querschnitt gewickelt werden, die für die Verarbeitung durch Nadelwickler zu starr wären. Mit den Spulenwicklern lassen sich mehrere Polschenkel gleichzeitig bewickeln und dann in den Polring einsetzen. Das führt zu einer großen Zeitersparnis bei der Herstellung. Dabei ist die Geometrie des Querschnittes einer Wicklung wählbar. So lassen sich Wicklungen mit symmetrischem oder unsymmetrischen Querschnitt wickeln. Weiterhin ist es vorteilhaft, daß die Motorwicklung lagenweise direkt auf den Pol oder separat auf eine Schalblone gewickelt werden können, so daß bei Defekt Wicklungen einzeln austauschbar sind.

Aus der großen Packungsdichte ergibt sich der Vorteil einer kleineren Baugröße der Motoren bei geringeren Fertigungs- und Materialkosten und höherem Wirkungsgrad wegen der geringeren benötigten Drahtlänge. Die erhöhte Packungsdichte reduziert gleichfalls die Gefahr des Entstehens von Geräuschen in der Wicklung. Außerdem wird durch die große Packungsdichte die Menge der eingeschlossenen Luft und damit die Gefahr elektrochemischer Korrosion reduziert. Das geht einher mit einer höheren Isolationsfestigkeit und einer besseren Wärmeabfuhr.

In einer besonders vorteihaften Ausführungsform werden der Polring und die Polschenkel in der Technik des sogenannten 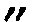 Stanzpaketierens" hergestellt, wobei zunächst Bleche entsprechenden Querschnittes ausgestanzt, dann zu einem Paket aufeinandergelegt und zusammengefügt werden. Das Stanzen erlaubt es, Polschenkel beliebigen Querschnittes in hoher Präzision herzustellen. Nach dem Zusammenfügen der Bleche zu einem geblechten Bauteil überträgt sich die Genauigkeit der Bleche auf die Kontur des Bauteils. Besonders vorteilhaft an dem Verfahren ist, daß nunmehr geschlossene Polringe mit getrennt zu montierenden Polschenkeln gefertigt werden können. Die geschlossenen Polringe weisen keine den magnetischen Fluß behindernden Spalte auf, so daß Vibrationen ausgeschlossen sind.

Im Falle der Statorpakete können auf diese Art Polringe und Polschenkel gefertigt werden, die mit sehr präzisen Linearführungen ausgestattet sind. Die Toleranzen der Führungen lassen sich dabei so dimensionieren, daß die Polschenkel in den Polring dauerhaft eingepreßt werden können, wobei der Luftspalt zwischen dem Polring und dem Fuß eines Polschenkels eine Weite von wenigen Mikrometern aufweist. Dieser Luftspalt ist im Verhältnis zum Luftspalt zwischen dem Rotor und dem Stator zu klein, als daß er den magnetischen Fluß zum Polring beeinträchtigen könnte. Durch das oben beschriebene Wicklungs-Verfahren läßt sich der Fertigungsprozeß so weit vereinfachen, daß ein manuelles Eingreifen nicht mehr nötig ist. Dadurch werden die Herstellungskosten stark gesenkt. Besonders vorteilhaft ist es, die erfindungsgemäßen Statorpakete bei Lüftermotoren oder bei Spaltrohrmotoren vorzusehen, die insbesondere in Kreiselpumpen für Heiz- oder Kühlsysteme eingesetzt werden.

Auch wenn Linearführungen beliebigen Querschnittes denkbar sind, so ist eine Schwalbenschwanzführung besonders vorteilhaft, weil sie einen formschlüssigen Halt in radialer und in Umfangsrichtung bietet und weil sie sich durch das Verfahren des Stanzpaketierens einfach mit solchen Toleranzen so herstellen läßt, daß sich das Schlittenteil gut auf oder in das Bett der Führung einpressen läßt. Dabei ist diese Art der Führung vergleichsweise unempfindlich gegenüber Fertigungstoleranzen.

In einer besonderen Ausführungsform weist ein Polschenkel in dem Bereich in dem er bewickelt wird eine Wickelkante auf, die einem Winkel von etwa 60° zur Senkrechten auf den Pol aufweist. Diese Wickelkante bietet den versetzt übereinandergelegten Wicklungen einen Halt am Rande der Wicklung. Dabei resultieren die 60° aus der Lage der Mittelpunkte von zylindrischen Drähten, die in höchster Packungsdichte aufeinandergelegt werden. Außerdem vermindert der geringere Überstand der Wicklungen vorallem bei mittleren und großen Drahtdurchmessern im Bereich von etwa 0.4 mm bis 1.5 mm die Baulänge des Motors gegenüber mit Nadeln gewickelten Motoren.

Eine Ausführungsform eines erfindungsgemäßen Statorpaketes ist in den Zeichnungen 1 und 2 dargestellt und wird im folgenden näher beschrieben. Es zeigen
- **Figur 1**: eine radialen Schnitt durch ein Statorpaket und
- **Figur 2**: einen axialen Schnitt durch ein Statorpaket.

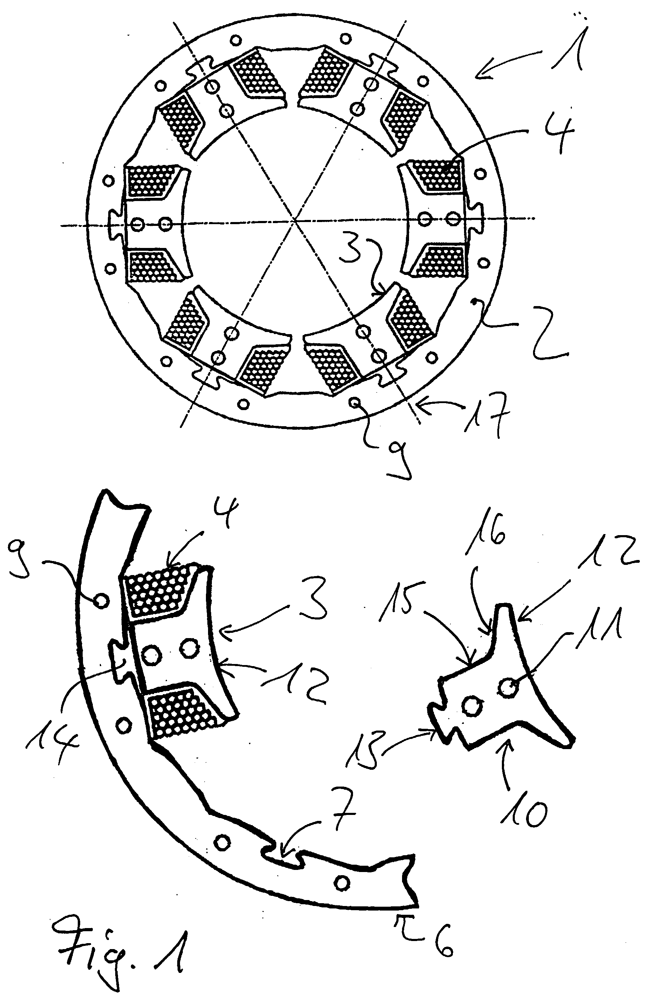

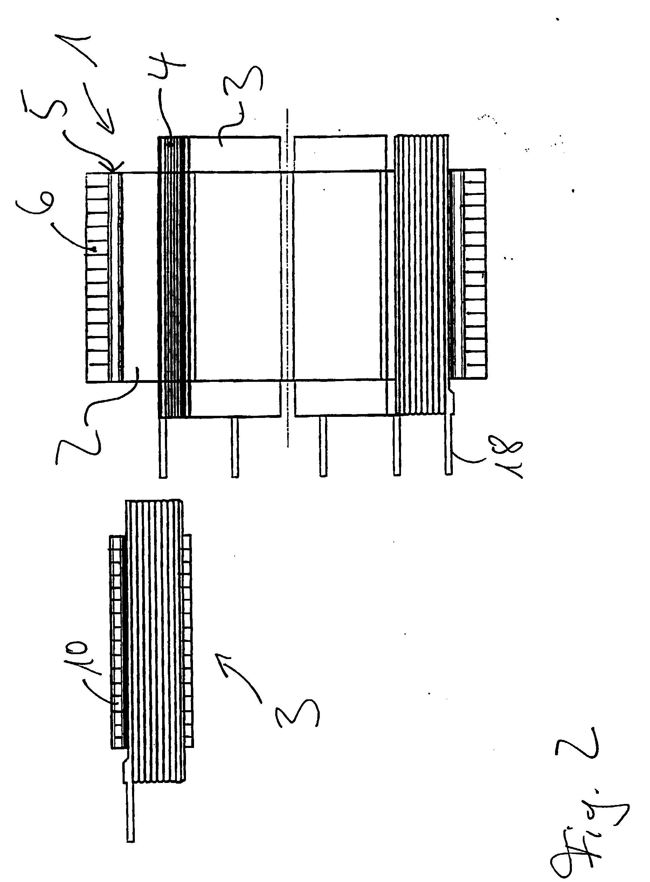

Die Figur 1 zeigt im oberen Teil einen radialen Schnitt durch ein Statorpaket 1 mit einem zylindrischen Polring 2 und Polschenkeln 3, die mit Wicklungen 4 umwickelt sind. Die Polschenkel 3 sind jeweils über eine axial angeordnete Linearführung 5 (siehe auch Figur 2) mit dem Polring 2 verbunden. Die Linearführung 5 ist in diesem Ausführungsbeispiel eine Schwalbenschwanzführung.

Wie aus Figur 2 ersichtlich ist der Polring 2 ein Paket von ausgestanzten Ringblechen 6, die zu einem geschlossenen Zylinder aufeinander gestapelt sind. Im unteren Teil von Figur 1 ist ein Stück eines gestanzten Ringbleches 6 gezeigt. Dieses Ringblech 6 hat an seinem Innenumfang Ausnehmungen 7, die nach dem Zusammenfügen der Ringbleche 6 zu dem Polring 2 das Bett der Linearführung bilden. Die einzelnen Ringbleche 6 sind gegeneinander durch Haltevorrichtungen gehalten, die Ausprägungen 9 in der Oberfläche der Ringbleche 6 aufweisen, wobei die Ausprägungen des einen Ringbleches 6 in die entsprechenden Ausnehmungen des darunterliegenden Ringbleches 6 eingreifen.

Ebenso wie der Polring 2, so ist auch jeder Polschenkel 3 aus einzelnen Polblechen 10 im Stanzpaketierverfahren zusammengefügt. Dabei sind die Polbleche 10 ausgestanzt und wiederum über Haltevorrichtungen 11 mit Ausprägungen und Ausnehmungen zu einem stabilen Stapel zusammengefügt.

In dieser Ausführungsform weist ein Polschenkel 3 an seinem dem Pol 12 gegenüberliegenden Fuß 13 einen den Schlittenabschnitt 14 auf, der ein Teil der Führung bildet. Ein Schlittenabschnitt 14 ist von derartigem Querschnitt, hier im Querschnitt eines Schwalbenschwanzes, daß er in eine Ausnehmung 7 des Polringes 2 einsetzbar ist. Die Polschenkel 3 weisen zwischen dem Pol 12 und dem Fuß 13 einen Wicklungsabschnitt 15 auf, in dem die Wicklung 4 einliegt. Deutlich zu erkennen ist, daß die Wicklung lagenweise und ohne ungewollte Überkreuzungen gewickelt ist.

Jeder Wicklungsabschnitt 15 hat eine Wickelkante 16, die einem Winkel von etwa 60° zur Normalen 17 auf den Pol 12 aufweist. Die einzelnen Wicklungen sind derart ausgeführt, daß die Enden 18 zu einer Stirnseite herausragen. Nach dem Bewickeln sind die Polschenkel 3 axial mit ihrem Schlittenabschnitt 14 in die Ausnehmung 7 der Führung eingepreßt.

Bei der Herstellung werden zunächst die Ringbleche 6 und die Polbleche 10 ausgestanzt. Die Bleche werden aufeinandergelegt und unter Druck verpreßt, so daß die Haltevorrichtungen greifen. Dann werden die fertigen Polschenkel 3 axial in die Ausnehmungen 7 eingepreßt. Dieser Vorgang läßt sich vollständig maschinell bewerkstelligen.

## Patentansprüche

1. Elektromotor, insbesondere zum Betrieb eines Lüfters oder einer Pumpe, mit einem Statorpaket, das von Wicklungen umwickelte Polschenkel aufweist, wobei die Polschenkel von einem Polring umgeben sind, an dem die Polschenkel lösbar befestigt sind,
**dadurch gekennzeichnet,**
daß die Polschenkel (3) jeweils über eine axial angeordnete Linearführung (5) mit dem Polring (2) verbunden sind.

2. Elektromotor nach Anspruch 1,
**dadurch gekennzeichnet,** daß die Linearführung (5) den Polschenkel (3) in radialer Richtung und in Umfangsrichtung kraftschlüssig und in axialer Richtung formschlüssig hält.

3. Elektromotor nach Anspruch 1 oder 2,
**dadurch gekennzeichnet**, daß die Linearführung (5) eine Schwalbenschwanzführung ist.

4. Elektromotor nach einem der vorherigen Ansprüche,
**dadurch gekennzeichnet**, daß der Polring (2) ein Paket von ausgestanzten Ringblechen (6) ist, die zu einem geschlossenen Zylinder aufeinander gestapelt sind.

5. Elektromotor nach Anspruch 4,
**dadurch gekennzeichnet**, daß im Innenumfang der gestanzten Ringbleche (6) Ausnehmungen (7) und/oder Vorsprünge vorgesehen sind, die nach dem Zusammenfügen der Ringbleche (6) zu dem Paket das Bett der Linearführung bilden.

6. Elektromotor nach einem der vorherigen Ansprüche,
**dadurch gekennzeichnet**, daß ein Polschenkel (3) von einem Stabel ausgestanzter Polbleche (10) gebildet ist.

7. Elektromotor nach Anspruch 6,
**dadurch gekennzeichnet,** daß ein Polschenkel (3) an seinen dem Pol (12) gegenüberliegenden Fuß einen den Schlitten der Führung bildenden Schlittenabschnitt (13) aufweist.

8. Elektromotor nach einem der vorherigen Ansprüche,
**dadurch gekennzeichnet,** daß die Polschenkel (3) und der Polring (2) in einem Stanzpaketierverfahren hergestellt sind.

9. Elektromotor nach einem der vorherigen Ansprüche,
**dadurch gekennzeichnet**, daß die Polschenkel (3) einen Wicklungsabschnitt (15) aufweisen, auf den eine Motorwicklung (4) aufwickelbar ist.

10. Elektromotor nach einem der vorherigen Ansprüche,
**dadurch gekennzeichnet,** daß der Wicklungsabschnitt (15) eine Wickelkante (16) hat, die einem Winkel von etwa 60° zur Normalen (17) auf den Pol aufweist.

11. Elektromotor nach einem der vorherigen Ansprüche,
**dadurch gekennzeichnet,** daß die Polschenkel (3) nach dem Bewickeln axial in die Führung (5) eingepreßt sind.

12. Verfahren zur Herstellung eines Statorpaketes für einen Elektromotor nach den Ansprüchen 1 bis 10,
**dadurch gekennzeichnet,**
- daß Ringbleche (6) ausgestanzt werden, die in ihrem Innenumfang Ausnehmungen (7) oder Vorsprünge, insbesondere mit dem Querschnitt eines Schwalbenschwanzes, aufweisen,
- daß die Ringbleche (6) zu einem Stapel übereinandergelegt und zu einem Polring zusammengefügt werden, wobei die übereinanderliegenden Ausnehmungen (7) eine Nut oder die Vorsprünge eine Schiene bilden,
- daß Polbleche (10) ausgestanzt werden, die Vorsprünge (13) oder Ausnehmungen, insbesondere mit dem Querschnitt eines Schwalbenschwanzes, aufweisen,
- daß die Polbleche (10) zu einem Stapel übereinandergelegt und zu einem Polschenkel (3) zusammengefügt werden, wobei die übereinanderliegenden Vorsprünge (13) eine Schiene oder die Ausnehmungen eine Nut bilden,
- daß die Polschenkel (3) mit einem Spulenwickler, insbesondere lagenweise, umwickelt werden und
- daß die Polschenkel (3) mit ihrer Schiene in eine Nut des Polringes (2) oder mit ihrer Nut in eine Schiene des Polringes (2) eingebracht, insbesondere eingepreßt, werden.

13. Verwendung des Statorpaketes nach Anspruch 12 für einen Spaltrohrmotor.
